# EUROPEAN PATENT APPLICATION

(11) **EP 4 455 095 A1**
(43) Date of publication of application: **30.10.2024**
(21) Application number: 22910512.7
(22) Date of filing: 03.10.2022
(51) Int. Cl.: C01G 55/00, B82Y 30/00, B82Y 40/00

(54) **LAYERED PLATINATE, LAYERED PLATINIC ACID, PLATINIC ACID NANOSHEET, PLATINUM NANOSHEET AND PRODUCTION METHOD THEREOF**

(30) Priority: 21.12.2021 JP 2021207235
(71) Applicant: University of The Ryukyus, Nakagami-gun, Okinawa 903-0213 (JP); SHINSHU UNIVERSITY, Matsumoto City, Nagano, 390-8621 (JP)
(72) Inventor: TAKIMOTO, Daisuke, Nakagami-gun, Okinawa 903-0213 (JP); SUGIMOTO, Wataru, Ueda City, Nagano 386-8567 (JP)
(74) Representative: Mewburn Ellis LLP
(86) International application number: PCT/JP2022/036927
(87) International publication number: WO 2023/119786

(57) **Abstract**

To provide a layered platinate, a layered platinic acid, a platinic acid nanosheet, a platinum nanosheet, and a manufacturing method of the platinum nanosheet that are used for fabricating a platinum nanosheet usable as an electrocatalyst for fuel cells, a catalyst for purifying exhaust gas, a catalyst for synthesizing chemical products, and the like.

The above-described problem is solved by a layered platinate comprising MₓPt_{y}O_{z}·nH₂O (where M is a monovalent metal), the MₓPt_{y}O_{z}·nH₂O being layered (the M being potassium and diffraction peaks are at 2Θ diffraction angles of 13° and 26°); a layered platinic acid comprising HₓPt_{y}O_{z}·nH₂O, the HₓPt_{y}O_{z}·nH₂O being layered; a platinic acid nanosheet having a thickness of 1 nm or less; and a platinum nanosheet having a thickness of 0.6 nm or less.

## Description

### Field of the Invention

The present invention relates to a layered platinate, a layered platinic acid, a platinic acid nanosheet, a platinum nanosheet, and a manufacturing method thereof.

### BACKGROUND ART

Platinum, having excellent catalytic properties, plays an important role in various applications such as electrocatalysts, exhaust gas catalysts, and chemical synthesis catalysts. As an example, the application of platinum to electrocatalysts for solid polymer-type fuel cells will be described. Platinum is used as an electrocatalyst for fuel cells because of its high catalytic activity in hydrogen oxidation and oxygen reduction reactions. However, platinum is a precious metal, which increases the cost of fuel cells. To solve this problem, an approach that reduces platinum usage is effective, and an increase in a platinum utilization rate is required. Practical fuel cells use electrocatalysts with platinum nanoparticles having a diameter of about 3 nm supported on porous carbon. The nanoparticles have a large specific surface area and exhibit high catalytic activity. However, the utilization efficiency is low, about 40%.

Various forms of platinum-based electrocatalysts have been developed. Among them, nanosheets are two-dimensional plate crystals with a thickness of several nanometers and a horizontal size on the order of micrometers, and thus have a large specific surface area and can be expected to have high catalytic properties as compared with those of nanoparticles. In particular, in nanosheets with monoatomic or diatomic layers, all atoms are exposed on a surface and the platinum utilization rate is an extremely high 100%. Successful realization of the application of such nanosheets to catalysts can lead to expectations of excellent catalytic properties as an alternative to nanoparticles.

As for nanosheets, a method of synthesizing platinum nanosheets using potassium tetrachloride and hexamethylenetetramine as starting materials is reported in Non-Patent Document 1, for example. According to this synthesis method, the starting materials are mixed in a liquid phase to obtain a layered compound, the layered compound is exfoliated to obtain a platinic acid nanosheet, and then the platinic acid nanosheet is electrochemically reduced to obtain a platinum nanosheet having a thickness of approximately 1.0 nm.

### PRIOR ART DOCUMENTS

### Non-Patent Documents

Non-Patent Document 1: A. Funatsu et al., Chem. Commun., 50, 8503-8506 (2014)

### Patent Documents

Patent Document 1: Japanese Laid-Open Patent Application Publication No. 2007-11248
Patent Document 2: Japanese Laid-Open Patent Application Publication No. 2009-136787

### SUMMARY OF THE INVENTION

### Problems to be Solved by the Invention

However, the platinum nanosheet described above is thick and regarded as constituted by a plurality of atomic layers, and is problematic in that the utilization rate of platinum is lower than that of nanoparticles.

The present inventors have reported that a monoatomic-layer ruthenium nanosheet having a thickness of about 0.6 nm can be obtained by synthesizing layered ruthenate and layered ruthenic acid by a solid phase reaction of ruthenium oxide and alkali metal carbonate, exfoliating the synthesized product to synthesize a ruthenium oxide nanosheet, and performing reduction treatment in a hydrogen flow (Patent Documents 1, 2). It is expected that, by applying this synthesis method to platinum, it is possible to obtain a platinum nanosheet.

The present invention has been made to solve the above-described problems, and an object thereof is to focus on platinum used as an electrocatalyst for fuel cells, a catalyst for purifying exhaust gas, a catalyst for synthesizing chemical products, and the like and provide a layered platinate, a layered platinic acid, a platinic acid nanosheet, a platinum nanosheet, and a manufacturing method thereof that are used for fabricating a platinum nanosheet.

### Means for Solving the Problems

(1) A layered platinate according to the present invention comprises MₓPt_{y}O_{z}·nH₂O (where M is a monovalent metal), the MₓPt_{y}O_{z}·nH₂O being layered.
   In the layered platinate according to the present invention, the M is potassium and diffraction peaks are at 2θ diffraction angles of 13° and 26°.
(2) A layered platinic acid according to the present invention comprises HₓPt_{y}O_{z}·nH₂O, the HₓPt_{y}O_{z}·nH₂O being layered.
(3) A platinic acid nanosheet according to the present invention comprises a thickness of 1 nm or less.
(4) A platinum nanosheet according to the present invention comprises a thickness of 0.6 nm or less.
(5) A manufacturing method of a platinum nanosheet according to the present invention comprises forming platinic acid into a layered platinate, forming the layered platinate obtained into a layered platinic acid, forming the layered platinic acid into a platinic acid nanosheet dispersed solution obtained by dispersing a platinic acid nanosheet, which is a platinic acid sheet having a thickness of 1 nm or less in a solvent, forming a platinic acid nanosheet monolayer film on a substrate by a mutual adsorption method using the platinic acid nanosheet dispersed solution, and reduction-treating the platinic acid nanosheet monolayer film in a hydrogen environment to manufacture a platinum nanosheet having a thickness of 0.6 nm or less.

### Effect of the Invention

According to the present invention, it is possible to provide a layered platinate, a layered platinic acid, and a platinic acid nanosheet that are used for fabricating a platinum nanosheet. Platinum is used as an electrocatalyst for fuel cells, a catalyst for purifying exhaust gas, a catalyst for synthesizing chemical products, and the like, and thus the platinum nanosheet obtained can be expected to have a wide range of applications. Further, according to the present invention, it is possible to provide a platinum nanosheet of a monoatomic layer having a high platinum utilization rate, and a manufacturing method thereof.

### BRIEF DESCRIPTION OF THE DRAWINGS

Fig. 1 shows electron microscope images of (a) layered platinic acid potassium and (b) layered platinic acid.
Fig. 2 shows an X-ray diffraction pattern of layered platinic acid potassium.
Fig. 3 shows an X-ray diffraction pattern of a sample obtained by dripping a platinic acid nanosheet dispersed solution several times onto a glass plate.
Fig. 4 is an AFM image of a platinic acid nanosheet.
Fig. 5 shows an X-ray diffraction pattern after reduction treatment of the platinic acid nanosheet.
Fig. 6 is an AFM image after the reduction treatment of the platinic acid nanosheet.
Fig. 7 is a transmission electron microscope image of a platinum nanosheet supported on carbon.
Fig. 8 is a plot of an ESCA decreasing rate after standardization using the initial ESCA for various catalysts.

### Embodiments of the Invention

The following describes in detail a layered platinate, a layered platinic acid, a platinic acid nanosheet, a platinum nanosheet, and a manufacturing method of the platinum nanosheet according to the present invention. The present invention, however, is not limited to the following description, within the range included in the technical scope thereof.

### [Layered Platinate, Layered Platinic Acid]

A layered platinate according to the present invention includes MₓPt_{y}O_{z}·nH₂O (where M is a monovalent metal), the MₓPt_{y}O_{z}·nH₂O being layered. M is desirably an alkali metal, and examples include Li, Na, K, Rb, Cs, and the like. Further, x and y allow preparation based on the blending amounts of platinic acid and an alkali metal compound.

The layered platinate is formed by (1) pulverizing an alkali metal compound and then mixing the compound with platinic acid (mixing step), (2) molding the obtained mixture into tablets (molding step), (3) firing the tablets a first time (first firing step), (4) pulverizing and mixing the tablets after the firing (pulverizing and mixing step), (5) molding the tablets again (molding step), (6) firing the tablets a second time (second firing step), and (7) cleaning the fired product until neutral (cleaning step). In this way, the layered platinate can be obtained.

The alkali metal compound used in the pulverizing and mixing step of (1) is not particularly limited, but examples include potassium carbonate. The mixing ratio of platinic acid to the alkali metal compound is not particularly limited, but can be set to, for example, platinic acid : alkali metal compound = about 1 : 0.5 to 1 : 5. The first firing step of (3) may be heat treatment in air or in an oxygen atmosphere or flow, within a range of 400°C to 800°C for 1 to 12 hours (preferably one to three hours). The second firing step of (6) may also be heat treatment in air or in an oxygen atmosphere or flow, within a range of 400°C to 800°C for 1 to 12 hours (preferably one to three hours).

The layered platinic acid can be obtained by treating the layered platinate obtained in an acidic solution. Treatment in the acidic solution is performed by immersion in an acidic solution ofHCl, for example, for about one to five days. The layered platinic acid obtained includes HₓPt_{y}O_{z}·nH₂O, the HₓPt_{y}O_{z}·nH₂O being layered.

### [Platinic Acid Nanosheet]

The platinic acid nanosheet according to the present invention has a thickness of 1 nm or less (preferably less than 1 nm). A platinic acid nanosheet dispersed solution (yellowish brown) can be obtained by causing an alkylammonium to react with the layered platinic acid obtained above to form an alkylammonium - layered platinic acid intercalation compound, and subsequently shaking the alkylammonium - layered platinic acid intercalation compound. A monolayer film of a platinic acid nanosheet can be obtained on a substrate by a mutual adsorption method using the obtained platinic acid nanosheet dispersed solution. It should be noted that, as the alkylammonium, tetrabutylammonium or the like, for example, can be preferably used. Examples of the substrate include an Si substrate, a quartz substrate, and the like. Examples of the formation of the platinic acid nanosheet monolayer film on the substrate include immersing the substrate in the platinic acid nanosheet dispersed solution, or dripping the platinic acid nanosheet dispersed solution onto the substrate, coating a monolayer film, or the like. In this way, a platinic acid nanosheet can be coated in a monolayer on the substrate.

### [Platinum Nanosheet]

The platinum nanosheet according to the present invention has a thickness of 0.6 nm or less. After the platinic acid nanosheet obtained above is coated in a monolayer on the substrate, the platinum nanosheet can be obtained by performing heat treatment (reduction treatment) for about 30 minutes to two hours in a hydrogen atmosphere or a hydrogen flow at a low temperature of 50 to 200°C (preferably 50 to 150°C).

The platinum nanosheet is manufactured by forming platinic acid into a layered platinate, forming the layered platinate obtained into a layered platinic acid, forming the layered platinic acid into a platinic acid nanosheet dispersed solution obtained by dispersing a platinic acid nanosheet, which is a platinic acid sheet having a thickness of 1 nm or less in a solvent, forming a platinic acid nanosheet monolayer film on a substrate by a mutual adsorption method using the platinic acid nanosheet dispersed solution, and reduction-treating the platinic acid nanosheet monolayer film in a hydrogen environment or a hydrogen flow. In this way, the platinum nanosheet can be manufactured.

### Examples

The present invention will now be described in further detail by way of examples.

### [Example 1]

First, in a glove box with an atmosphere replaced with nitrogen, potassium carbonate (K₂CO₃) was pulverized and then blended with platinic acid (PtO₂) and mixed for 30 minutes. The mixing ratio (PtO₂:K₂CO₃) was set to 1: 1. The mixture extracted from the glove box was pressed at 1.5 tons for 10 minutes and molded into tablets. Next, the molded tablets were fired at 800°C for one hour in air (first firing). After firing, the tablets were returned to the glove box again and, after pulverizing and mixing, pressed at 1.5 tons for 10 minutes to mold the tablets, and the molded tablets were fired at 800°C for one hour in air (second firing). Next, decantation was performed in ultrapure water until neutral. In this way, the layered platinate was obtained. This layered platinate was placed in a 1M HCl solution and left for three days to obtain a layered platinic acid.

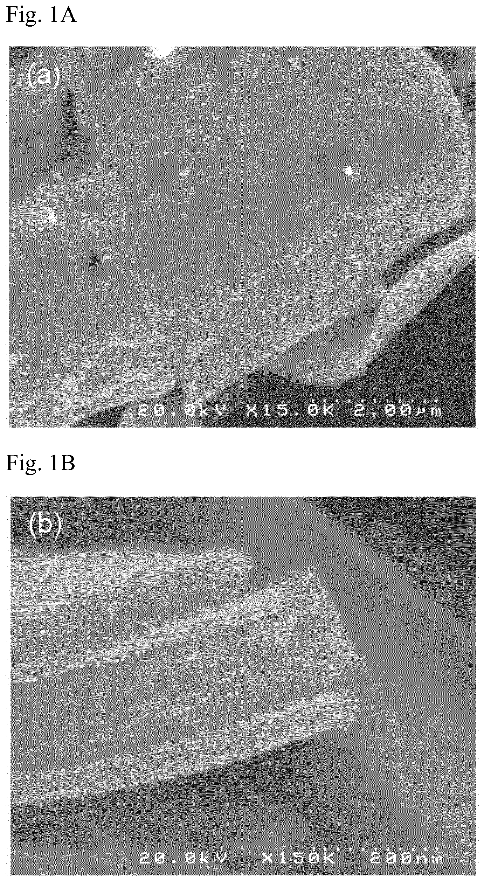

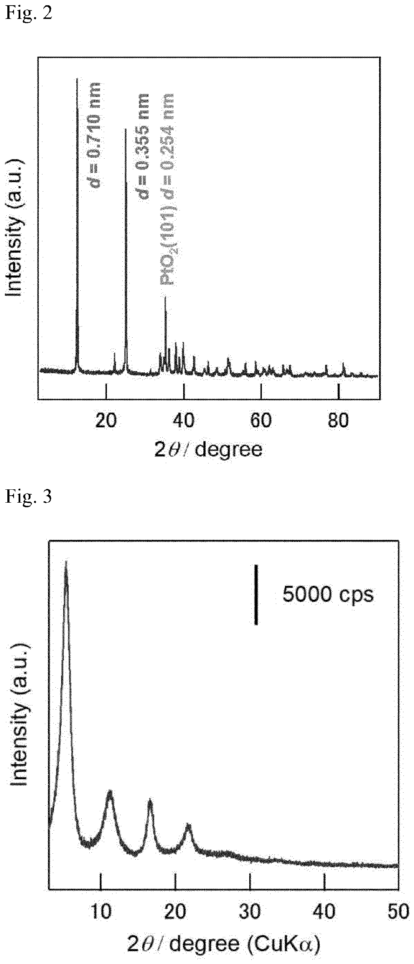

Fig. 1 shows the electron microscope images of (a) the layered platinate and (b) the layered platinic acid obtained. From the observed images, a clear layered structure could be found in both the layered platinate and the layered platinic acid. Fig. 2 shows an X-ray diffraction pattern of the layered platinate (X-ray source: CuK α rays). In the case of the layered platinate, crystalline peaks appeared at d = 0.71 nm and 0.36 nm.

### [Example 2]

A platinic acid nanosheet was fabricated from the layered platinic acid. Using the layered platinic acid obtained in Example 1, a mixed solution of a 10% tetrabutylammonium hydroxide (TBAOH) solution and ultrapure water, 0.6 mL and 25.4 mL, respectively, was added. Subsequently, the mixture was subjected to shaking at 120 rpm for seven days. In this way, a platinic acid nanosheet dispersed solution was obtained. This platinic acid nanosheet dispersed solution was yellow in color. Fig. 3 shows an X-ray diffraction pattern of a sample obtained by dripping the platinic acid nanosheet dispersed solution several times onto a glass plate. Peaks caused by high-order reflections were seen at d = 1.71 nm, 0.82 nm, 0.55 nm, and 0.41 nm. This is a typical X-ray diffraction pattern observed in a nanosheet laminate.

### [Example 3]

The platinic acid nanosheet dispersed solution obtained in Example 2 was used to form a film on a substrate of the platinic acid nanosheet by the alternate adsorption laminating method. First, a Si substrate to be coated by the platinic acid nanosheet was immersed in a 10-mass% poly(diallyldimethylammonium chloride) (PDDA) solution and cleaned in ultrapure water, and then immersed in the platinic acid nanosheet dispersed solution. In this way, an Si substrate monolayer-coated with a platinic acid nanosheet was obtained.

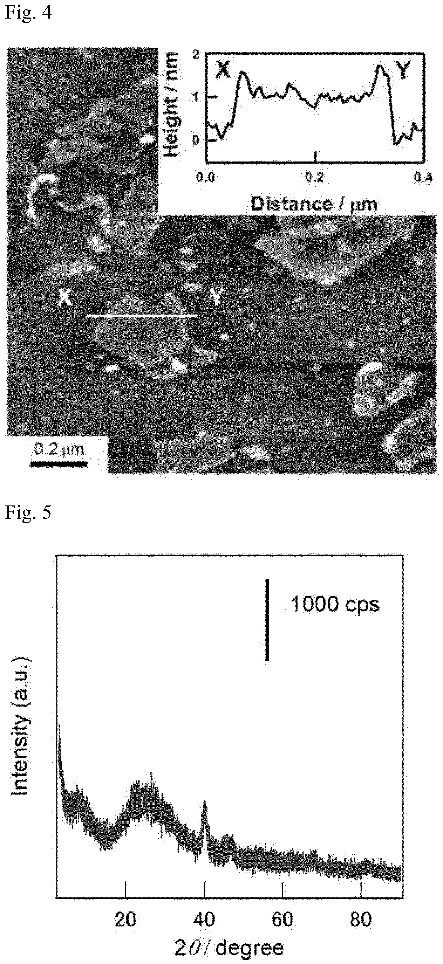

Fig. 4 is an atomic force microscope (AFM) image of the platinic acid nanosheet taken with an AFM (Bruker, Digital Instruments Nanoscope IIIa). A thickness of the platinic acid nanosheet was measured, and the result was 0.9 nm ± 0.1 nm. Fig. 5 is a transmission electron microscope (TEM) image showing a pattern of the platinic acid nanosheet. This TEM image was taken after dripping the platinic acid nanosheet dispersed solution onto an observation grid, and then drying at 60°C throughout the night.

### [Example 4]

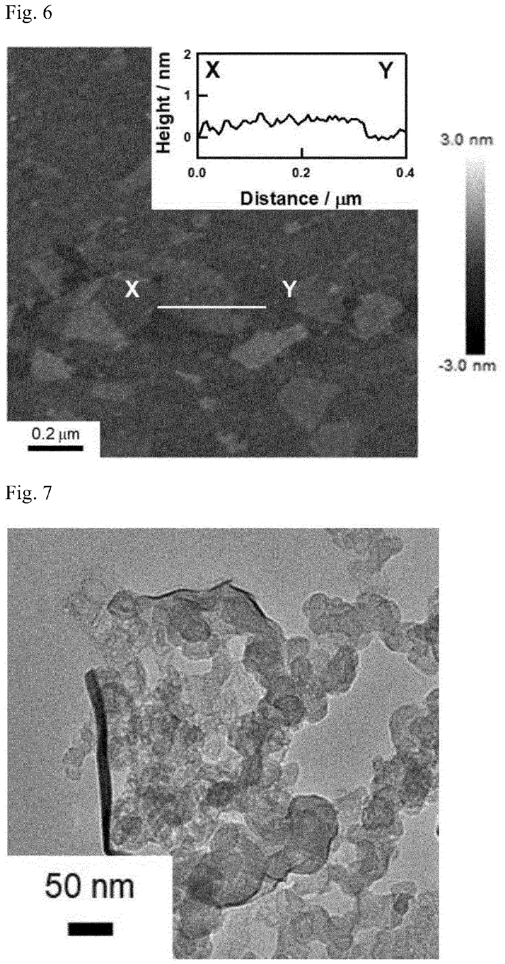

The glass plate with several drops of platinic acid nanosheet dispersed solution obtained in Example 2 was heat-treated at 100°C for one hour in a flow of hydrogen. Fig. 5 shows the X-ray diffraction pattern after the reduction treatment, and no pattern caused by high-order reflections observed in the nanosheet laminate was seen. On the other hand, a pattern attributable to Pt (111) was seen. Fig. 6 is an AFM image of the Si substrate coated with the platinic acid nanosheet obtained in Example 3, and the substrate heat-treated at 100°C for one hour in a hydrogen flow. A thickness of the nanosheet after heat treatment was 0.6 nm ± 0.1 nm. The above results show that the platinic acid nanosheet was reduced by heat treatment and topotactically converted into a platinum nanosheet.

### [Example 5]

Pt(ns)/C (platinum nanosheet supported on carbon) was prepared using the platinic acid nanosheet dispersed solution obtained in Example 2. First, ultrapure water was added to produce 1 g/L of Ketjen black (KB), and the KB was dispersed in ultrapure water by mechanical and ultrasonic agitation to obtain a KB dispersed liquid. The platinic acid nanosheet dispersed solution obtained in Example 2 was adjusted to produce a 20-mass% platinic acid nanosheet (PtO₂(ns)) relative to the KB by being dripped drop by drop into the KB dispersed liquid. Subsequently, mechanical and ultrasonic agitation was performed to cause support of the PtO₂(ns) on the KB and precipitate the product. Subsequently, the supernatant was removed and ultrapure water was added. This operation was repeated until the supernatant became neutral, and the TBAOH was removed. Subsequently, vacuum drying was performed at 60°C for six hours. The obtained PtO₂(ns)/C was placed on an alumina board and fired at a flow rate of 100 mL/min at 100°C for two hours in an H₂ flow in a tube furnace. The PtO₂(ns) was reduced by this firing to obtain 10-mass% Pt(ns)/C. Fig. 7 is a transmission electron microscope image of the 10-mass% Pt(ns)/C obtained in this case. As can be seen from Fig. 7, the two-dimensional form was maintained without aggregation even after reduction.

### [Example 6]

Next, the electrochemical surface area (ECSA) of Pt(ns)/C was evaluated. First, a glassy carbon (GC) electrode was polished to smoothen the surface of the GC electrode. The GC electrode was then cleaned by ultrasonic cleaning in ultrapure water and ethanol. After the polishing and cleaning, 75-vol% 2-propanol solution and 5-mass% Nafion (trademark) solution were added to the Pt(ns)/C catalyst and the Pt(ns)/C catalyst was dispersed in 75-vol% 2-propanol solution by mechanical and ultrasonic agitation. This was used as a catalyst dispersed liquid, and the catalyst dispersed liquid was dripped onto the GC electrode. After the dripping, the GC electrode was dried in air. Subsequently, vacuum drying was performed at 60°C and a sample electrode was fabricated.

An electrochemical surface area (ECSA) was evaluated using the sample electrode described above from a cyclic voltammogram. The ECSA was calculated from an amount of electricity in a hydrogen adsorbing region of the cyclic voltammogram. The ECSA of Pt(ns)/C was 124 m²/(g-Pt). It should be noted that the ECSA of conventionally known Pt nanoparticles (average diameter: 3 nm) / carbon carriers was 79 m²/(g-Pt), and thus an increase in ECSA of about 2x was confirmed.

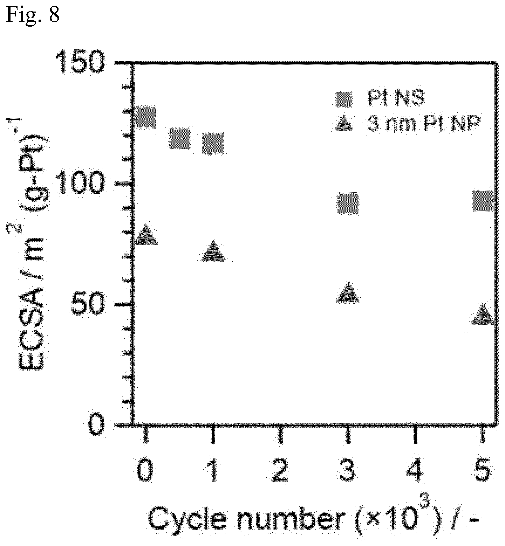

With regard to oxidation-reduction reaction (ORR) activity, Pt(ns)/C was 415 A/(g-Pt), two times that of the Pt nanoparticle/C ratio. The durability of the cathode catalyst was evaluated based on the ECSA decreasing rate. Fig. 8 is a plot of the ECSA decreasing rate after standardization using the initial ECSA for various catalysts. Pt(ns)/C was higher ECSA retention than that of the conventionally known Pt nanoparticles (average diameter: 3 nm)/carbon carriers. This result showed the high durability of Pt(ns)/C.

## Claims

1. A layered platinate comprising:
MₓPt_{y}O_{z}·nH₂O (where M is a monovalent metal), wherein
the MₓPt_{y}O_{z}·nH₂O is layered.

2. The layered platinate according to claim 1, wherein
the M is potassium, and diffraction peaks are at 2θ diffraction angles of 13° and 26°.

3. A layered platinic acid comprising:
HₓPt_{y}O_{z}·nfₕO, wherein
the HₓPt_{y}O_{z}·nH₂O is layered.

4. A platinic acid nanosheet comprising:
a thickness of 1 nm or less.

5. A platinum nanosheet comprising:
a thickness of 0.6 nm or less.

6. A manufacturing method of a platinum nanosheet, the manufacturing method comprising:
forming platinic acid into a layered platinate;
forming the layered platinate obtained into a layered platinic acid;
forming the layered platinic acid into a platinic acid nanosheet dispersed solution obtained by dispersing a platinic acid nanosheet, which is a platinic acid sheet having a thickness of 1 nm or less in a solvent;
forming a platinic acid nanosheet monolayer film on a substrate by a mutual adsorption method using the platinic acid nanosheet dispersed solution; and
heat-treating the platinic acid nanosheet monolayer film in a hydrogen environment to manufacture a platinum nanosheet having a thickness of 0.6 nm or less.
